# EUROPÄISCHE PATENTSCHRIFT

(11) **EP 0 445 527 B1**
(45) Veröffentlichungstag und Bekanntmachung des Hinweises auf die Patenterteilung: **12.10.1994**
(21) Anmeldenummer: 91101404.1
(22) Anmeldetag: 02.02.1991
(51) Int. Cl.: G02B 6/12, G01F 1/01

(54) **Optisches Wellenleiterbauelement und Verfahren zum Herstellen eines optischen Wellenleiterbauelementes**
Optical waveguide component and method of manufacturing an optical waveguide component
Composante optique de guide d'onde et méthode de fabrication d'une composante optique de guide d'onde

(30) Priorität: 05.03.1990 DE 4006863
(43) Veröffentlichungstag der Anmeldung: 11.09.1991
(73) Patentinhaber: Alcatel SEL Aktiengesellschaft, D-70435 Stuttgart (DE); ALCATEL N.V., NL-1077 XX Amsterdam (NL)
(72) Erfinder: Springer, Johann, Dr., W-7307 Aichwald (DE); Hanisch, Helmut, W-7440 Nürtingen (DE); Holl, Elke, W-7140 Ludwigsburg (DE)
(74) Vertreter: Pohl, Herbert, Dipl.-Ing.

(56) Entgegenhaltungen:
- EP-A- 0 171 226
- EP-A- 0 344 857
- JAPANESE JOURNAL OF APPLIED PHYSICS, Bd. 19, Nr. 7, Juli 1980, TOKYO JP Seiten 372 - 374; M. KIMURA ET AL.: 'Optical waveguides along bothsides of a groove in silicon".
- PATENT ABSTRACTS OF JAPAN, vol. 9, no. 292 (P-406) (2015) 19 November 1985 & JP A 60129711

## Beschreibung

Die vorliegende Erfindung bezieht sich auf ein optisches Wellenleiterbauelement nach dem Oberbegriff des Anspruchs 1 und auf ein Verfahren zum Herstellen eines optischen Wellenleiterbauelementes.

Für derartige optische Wellenleiterbauelemente sind planare Strukturen bekannt, bei denen auf ein Glassubstrat ein optisches Polymer in einer sehr dünnen Schicht aufgebracht wird und das dann entsprechend dem oder den gewünschten Wellenleitern photolithographisch strukturiert wird. Daraus ergeben sich Lichtwellenleiter, deren Querschnitt die Form eines sehr dünnen und breiten Rechtecks besitzt, bspw. in der Größenordnung von 1 µm zu 10µm. Da diese Querschnittsform sich von der Querschnittsform von der Lichtwellenleitung dienenden Glasfasern erheblich unterscheidet, ergeben sich bei derartigen optischen Wellenleiterbauelementen große Ein- und Auskoppelverluste.

Aus einem Aufsatz von Mitsuteru Kimura et al in "Japanese Journal of Applied Physics", Bd 19, Nr. 7. Seiten 372 - 374 ist ein optisches Wellenleiterbauelement bekannt, bei dem durch Einbringen von optischem Polymer in einen zuvor geätzten Kanal Höhe und Breite des Querschnittes des Lichtwellenleiters, im Gegensatz zu bekannten, planar auf ein Substrat aufgebrachten Wellenleitern, derart aneinander angeglichen sind, daß seine Querschnittsgeometrie derjenigen der für die Lichtwellenleitung verwendeten Übertragungsglasfasern nahekommt. Ein- und Auskoppelverluste an Übergängen zu Glasfasern werden damit wesentlich verringert.

Durch das bekannte Verfahren, den Querschnitt des Lichtwellenleiters auszuätzen und anschließend mit Polymer auszufüllen, können Lichtwellenleiter beliebiger Form auf ein Substrat aufgebracht oder besser in dieses eingebettet werden, d.h. nicht nur geradlinige, sondern auch gekrümmte, Y-förmige, gekreuzte und dergleichen gestaltete Wellenleiter können hergestellt werden.

Wenn hier von Wellenleiterbauelementen mit mindestens einem Lichtwellenleiter die Rede ist, so kann es sich um einfache Übertragungsbauelemente, aber auch um Koppler, Verzweigungen oder kompliziertere Strukturen handeln.

In neuester Zeit wurden vermehrt nicht linear optische Polymere, sogenannte NLO-Polymere verwendet, um z.B. Polarisationsregler, optische Isolatoren, oder abstimmbare Koppler zu realisieren. Solche NLO-Polymere müssen, damit sie die gewünschten Eigenschaften bekommen, nach ihrer Formung in einem relativ starken elektrischen Feld, gegebenenfalls auch noch bei vorgegebener Temperatur, polarisiert werden.

Dies bereitet bei Wellenleiterbauelementen, bei denen in bekannter Weise optisches Polymer in vorher in ein Substrat eingeätzte Kanäle eingebracht wurde, jedoch Schwierigkeiten. Je nach Geometrie und elektrischen Eigenschaften des verwendeten Substrates wird das das Substrat durchdringende elektrische Feld nämlich durch das Substrat verändert und geschwächt. Bei Verwendung eines Glassubstrates mit auf Ober- und Unterseite des Substrates flächig angeordneten Elektroden wird das elektrische Feld im Glas z.B. auch dadurch verändert, daß das NLO-Polymer eine höhere elektrische Leitfähigkeit besitzt als das Glas des Substrates.

Es ist deshalb Aufgabe der Erfindung, ein optisches Wellenleiterbauelement zu schaffen, bei dem ein in einen vorgeätzten Kanal eingebrachtes optisches Polymer ohne Schwierigkeiten nach dem Einbringen polarisiert werden kann, und das sich deshalb für den Einsatz von NLO-Polymer besonders gut eignet.

Diese Aufgabe wird durch die im Patentanspruch 1 angegebenen Merkmale gelöst.

Das Einbringen einer Elektrode am Grund des eingeätzten Kanales und die Anwendung einer als Gegenelektrode dienenden, dicht auf dem Polymer aufliegenden leitenden Abdeckung ermöglichen das Anlegen eines starken elektrischen Feldes unmittelbar an das zu polarisierende NLO-Polymer. Verzerrungen und Abschwächung des elektrischen Feldes durch das Substrat werden vermieden.

Weiterbildungen des optischen Wellenleiterbauelementes sind in den abhängigen Ansprüchen 2 bis 4 angegeben. Hierbei betrifft Anspruch 2 die Gestaltung des Kanales, die eine besonders einfache Herstellung der am Kanalgrund einzubringenden Elektrode ermöglicht.

Anspruch 3 betrifft eine Auswahl geeigneter Materialien zur Bildung einer ätzmittelresistenten Schutzschicht vor der Herstellung eines Kanales.

Gegenstand des Anspruchs 4 ist eine dünne dielektrische Zwischenschicht zur Trennung des NLO-Polymers von den zu seiner Polarisierung verwendeten Elektroden. Hierdurch kann z.B. eine eventuelle Diffusion von Elektrodenmaterial in das NLO-Polymer verhindert werden. Auch wird eine unerwünschte zusätzliche Dämpfung aufgrund des unmittelbaren Kontaktes zwischen polarisiertem NLO-Polymer und metallischer Elektrode vermieden.

Der unabhängige Anspruch 5 gibt ein Verfahren zur Herstellung eines optischen Wellenleiterbauelements nach einem der Patentansprüche 1 - 3 an. Dieses Verfahren erlaubt auf sehr einfache Weise die Herstellung der gewünschten Kanalstrukturen und insbesondere eine einfache Herstellung der am Grund eines Kanals zu schaffenden Elektrode, die hier durch einfaches Bedampfen des Kanalgrundes entsteht und die durch infolge der Abschattung durch die überstehende Schutzschicht unbedampft gebliebenen Kanal-Seitenbereiche von der aufliegenden Gegenelektrode elektrisch getrennt ist.

Die Ansprüche 6 bis 10 betreffen Ausgestaltungen des im Anspruch 5 beschriebenen Verfahrens.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figuren 1 - 6: einzelne Verfahrensschritte zum Herstellen eines optischen Wellenleiterbauelementes, wobei dieses in stark vergrößerter, schematischer und abgebrochener Schnittdarstellung gezeigt ist, gemäß einem Ausführungsbeispiel vorliegender Erfindung und
- Figur 7: eine entsprechende Darstellung des vorletzten Verfahrensschrittes zur Herstellung eines optischen Wellenleiterbauelementes gemäß einem zweiten Ausführungsbeispiel vorliegender Erfindung.

Das im folgenden beschriebene Verfahren dient zur Herstellung von optischen Wellenleiterbauelementen nahezu beliebiger Art, wie bspw. Kopplern, Verzweigern, Polarisationsreglern, optischen Isolatoren und dgl. Dabei können an den optischen Wellenleiterbauelementen Lichtwellenleiter in beliebigen Formen verwirklicht sein, also geradlinige, kurvenförmige bzw. gekrümmte, Y-förmige, doppel-Y-förmige und dgl. Ausgestaltungen.

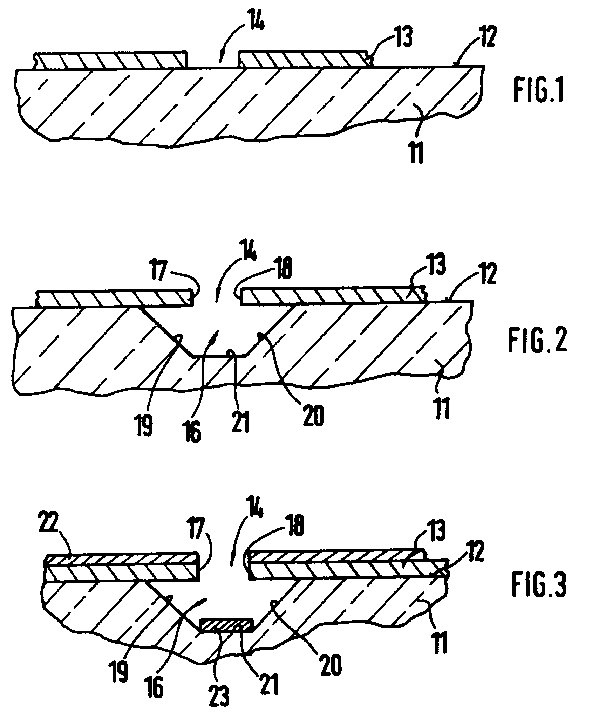

Zur Herstellung eines optischen Wellenleiterbauelementes ist als Grundlage ein Glassubstrat 11 verwendet, dessen Grundfläche derjenigen des zu erstellenden Wellenleiterbauelement entspricht. Eine Oberfläche 12 des Glassubstrats 11 wird mit einer Schutzschicht 13 überzogen. Die Schutzschicht 13 kann bspw. aus Tantal sein, aber auch aus Gold oder einem Kunststoff, nämlich Polyimid. Diese für die Schutzschicht 13 verwendbaren Materialien können einem photolitographischen Prozeß unterworfen werden, durch den mit Hilfe eines geeigneten Ätzmittels feine Linienstrukturen in die Schutzschicht 13 eingeätzt werden, und zwar an den Stellen, an denen Lichtwellenleiter vorgesehen werden sollen. In Fig. 1 ist bspw. eine derartige Mikrolinie bzw. Mikrospalt 14 in der Schutzschicht 13 dargestellt. Bspw. besitzt der Mikrospalt 14 eine Breite von 7 µm, wobei die Länge beliebig sein kann, je nach dem, was mit dem Lichtwellenleiter bzw. der Lichtwellenleiteranordnung auf bzw. in dem Wellenleiterbauelement erreicht werden soll.

Bei der Verwendung von Tantal für die Schutzschicht 13 wird nach dem photolitographischen Prozeß, mit dem der oder die Mikrospalte 14 eingeätzt worden sind, die Tantalschicht einem thermischen Oxidationsprozeß unterworfen, der über mehrere Stunden bei ca. 400 C° an Luft stattfindet und mit dem eine Ta₂O₅-Schutzschicht erreicht wird.

Die so aufgebrachte Schutzschicht 14 aus Tantaloxid, Gold oder Polyimid ist gegenüber gepufferter oder nicht-gepufferter Flußsäure, die als Ätzmittel für das Glassubstrat 11 verwendet wird, resistent. Flußsäure wird nun über den Mikrospalt 14 auf die Oberfläche 12 des Glassubstrats 11 gebracht, so daß der in Fig. 2 dargestellte Kanal 16 erreicht wird. Da sich die durch den Mikrospalt 14 eindringende Flußsäure beim Ätzen des Glassubstrats 11 auch unter den den Mikrospalt 14 begrenzenden Längsränder 17 und 18 der Schutzschicht 13 ausbreitet, ergibt sich aufgrund der zeitlichen Einwirkung der Flußsäure auf das Glassubstrat 11 in Abhängigkeit der Eindringtiefe eine trapezartige Begrenzungsfläche 19, 20 des Kanals 16. Das Glassubstrat 11 wird solange der gepufferten oder nicht-gepufferten Flußsäure ausgesetzt, bis der Kanal 16 eine Tiefe von etwa 5 bis 7 µm erreicht hat, also eine Tiefe, die in etwa der Breite des Mikrospaltes 14 bzw. der Breite des Kanalgrundes 21 entspricht. Dadurch ist eine Querschnittsgeometrie des Kanals 16 erreicht, bei dem die beiden Abmessungen bezüglich Tiefe bzw. Höhe und Breite im Mittel einander angenähert sind, jedenfalls nicht um ein Vielfaches auseinanderliegen. Die Querschnittsgeometrie des Kanals 16 bzw. die Neigung von dessen Flanken 19,20 ist in gewissen Grenzen je nach Art und Einwirkungsdauer der Flußsäure beeinflußbar.

Würde man für den Lichtwellenleiter ein rein optisches Polymer verwenden, so könnte nun der Kanal 16 mit dem betreffenden Polymer gefüllt werden, woran sich entweder ein Polymerisiervorgang für das optische Polymer oder ein Trocknungsvorgang anschließen würde.

Um jedoch eine größere Vielfalt von optischen Wellenleiterbauelementen auf diese Weise zu erreichen, wird ein elektro-optisches Polymer in Form eines NLO-Polymers (NLO = nicht-linear optisch) verwendet. Bevor das NLO-Polymer jedoch in den Kanal 16 eingebracht werden kann, wird zunächst gemäß Fig. 3 auf die Schutzschicht 13 entweder ganzflächig oder lediglich im Bereich des oder der jeweiligen Mikrospalte 14 eine Metallschicht 22 aufgebracht, bspw. und vorzugsweise aufgedampft. Für die Metallschicht 22 kann bspw. Gold verwendet werden. Bei dieser Metallisierung der Schutzschicht 13 gelangt das Metall, bspw. Gold, auf den Grund 21 des Kanales 16 durch den oder die Mikrospalte 14 hindurch. Da nach dem Einätzen des Kanals 16 die Längsränder 17 und 18 der Schutzschicht 13 die trapezartigen Begrenzungsflächen bzw. -flanken 19 und 20 des Kanals 16 überragen, ist erreicht, daß bei diesem Metallisierungsvorgang das in den Kanal 16 gelangende Metall nicht auf die Flanken 19 und 20 gelangt, sondern lediglich auf den Kanalgrund 21 und dort eine Elektrode 23 bildet.

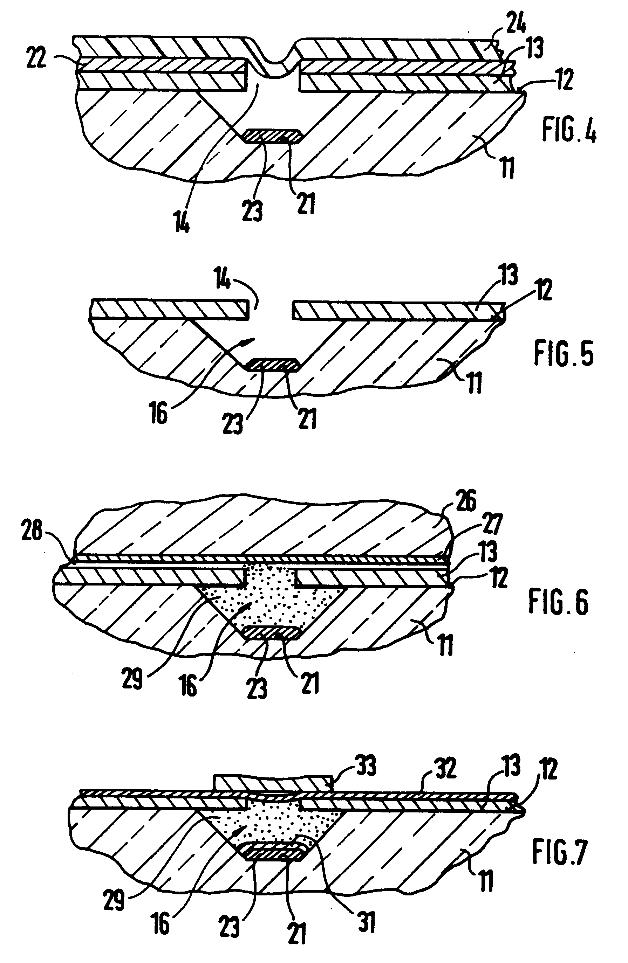

Die bspw. aufgedampfe Metallschicht 22 soll nun, soweit sie auf der Schutzschicht 13 angeordnet ist, wieder entfernt werden, nicht jedoch die Elektrode 23. Es ist dann, wenn entsprechende Wellenleiterbauelemente geschaffen werden sollen, möglich, diese Metallschicht 22 auf der Schutzschicht 13 zu strukturieren, also lediglich einen Teil dieser Metallschicht 22 wieder zu entfernen. Jedenfalls wird für beide Fälle ein photolithographischer Prozeß durchgeführt und hierzu auf die Metallschicht 22 und damit auch auf die Elektrode 23 ein Photolack 24 aufgebracht, wie dies aus Fig. 4 ersichtlich ist. Wird der Photolack, der hier ein Positivlack ist, kurz belichtet, dann bleibt der auf der Elektrode 23 am Kanalgrund 21 vorhandene deutlich dickere Photolack unterbelichtet, bleibt also beim Entwickeln auf der Elektrode 23 stehen, so daß im anschließenden Ätzvorgang lediglich die Metallschicht 22 auf der Schutzschicht 23 ganz oder teilweise weggeätzt wird. Es ist aber auch möglich, bei diesem photolithographischen Vorgang den Kanal 16 mit Hilfe einer Maske abzudecken.

Nachdem nun auch der Fotolack auf der Elektrode 23 entfernt worden ist, ergibt sich der in Fig. 5 dargestellte Zustand.

Gemäß dem ersten Ausführungsbeispiel vorliegender Erfindung wird entsprechend Fig. 6 auf die Schutzschicht 13 eine Glasplatte 26 mit ihrer metallisierten Seite 27 ganzflächig aufgelegt, es versteht sich, daß dabei die Metallschicht 27 auf der Glasplatte 26 auch nur in dem der oder den Elektroden 23 am Kanalgrund 21 gegenüberliegenden Bereich oder Bereichen vorgesehen sein kann. Dadurch ist der Kanal allseits geschlossen und somit zu einer Kapillaren geformt. Der oder die Kanäle 16 einschließlich des oder der Mikrospalte 14 werden nun mit flüssigem NLO-Polymer 29 gefüllt, was bspw. durch Eindrücken mit Hilfe einer Spitze in eine Vorratsausnehmung oder von einem offenen Kanalende her erfolgen kann. Als NLO-Polymer 29 kommt bspw. ein Monomer bzw. Prepolymer in Frage. Das NLO-Polymer wird dann thermisch oder mit UV-Strahlung polymerisiert. Es ist auch möglich, ein gelöstes NLO-Polymer zu verwenden, das dann nach Einbringen in den Kanal 16 von Lösungsmittel befreit, also getrocknet werden muß, was allerdings zweckmäßigerweise bei abgenommener Glasplatte 26 erfolgen sollte.

Im Anschluß daran muß das NLO-Polymer 29 polarisiert werden, um diesem eine optische Vorzugsrichtung und damit einen entsprechenden Brechungsindex mitzugeben. Die Polarisierung des NLO-Polymers erfolgt durch Anlegen eines großen elektrischen Feldes zwischen der Elektrode 23 am Kanalgrund 21 und der Metallschicht 27 auf der aufliegenden Glasplatte 26. Damit ist der Lichtwellenweiter(abschnitt) hergestellt.

Nach Abnehmen der Glasplatte 26 ergibt sich das fertige optische Wellenleiterbauelement, das je nach Art und Typ des Wellenleiterbauelementes mit weiteren Elektroden bestückt werden kann. Ggf. kann, wie in Fig. 6 dargestellt, zwischen Gegenelektrode 27 und Schutzschicht bzw. NLO-Polymer eine dielektrische Zwischenschicht 28 angeordnet sein.

Zum Erreichen einer in Fig. 7 gemäß einem zweiten Ausführungsbeispiel vorliegender Erfindung gezeigten optischen Wellenleiterbauelementes wird im Anschluß an den Verfahrensschritt gemäß Fig. 5 zunächst auf die Elektrode 23 am Kanalgrund 21 eine dielektrische Zwischenschicht 31 aufgebracht. Diese dielektrische Zwischenschicht 31 kann bspw. aus PMMA (Polymethylmetacrylat) bestehen. Daran anschließend wird das NLO-Polymer in flüssigem Zustand in den Kanal 16 eingebracht, was bspw. durch Aufschleudern (spin coating), Aufstreichen, Aufrakeln oder dgl. erfolgen kann. Auch hier schließt sich dann entweder ein Polymerisationsprozeß oder ein Trocknungsprozeß an. Danach wird auf die Schutzschicht 13 und über die Mikrospalte 14 hinweg eine obere dielektrische Zwischenschicht 32 aufgebracht, die ebenfalls bspw. auf PMMA bestehen kann. Zum Polarisieren des NLO-Polymers wird dann entweder ganzflächig oder im Bereich des Kanales 16, also der Elektrode 23 gegenüberliegend, auf die obere dielektrische Zwischenschicht 32 eine Gegenelektroder 33 aufgelegt. Die obere und die untere dielektrische Zwischenschicht 31, 32 dienen dazu, das NLO-Polymer von den Metallelektroden 23 und 33 optisch zu trennen.

## Patentansprüche

1. Optisches Wellenleiterbauelement mit einem Substrat, vorzugsweise einem Glassubstrat (11), das mindestens einen Lichtwellenleiter aus optischem Polymer (29) enthält, welches sich in einem in die Substratoberfläche eingeätzten Kanal (16) befindet, der an seinem Grund eine Breite besitzt, die etwa seiner Tiefe entspricht, **dadurch gekennzeichnet,** daß das optische Polymer (29) ein Polymer mit nicht linearen optischen Eigenschaften ist und daß der Kanal (16) an seinem Grund (21) mit einer Elektrode (23) versehen ist.

2. Optisches Wellenleiterbauelement nach Anspruch 1, dadurch gekennzeichnet, daß der Kanal (16) oberhalb seiner beiden Längsseiten (19, 20) von einer Schutzschicht (13), unter Freilassen eines mittigen Längsspaltes (14), teilweise bedeckt ist, und daß die Breite des Längsspaltes etwa der Tiefe des Kanals (16) entspricht.

3. Optisches Wellenleiterbauelement nach Anspruch 2, dadurch gekennzeichnet, daß die Schutzschicht (13) aus Tantaloxid Ta₂O₅, Gold oder Polyimid besteht.

4. Optisches Wellenleiterbauelement nach Anspruch 2, dadurch gekennzeichnet, daß zwischen der Elektrode (23) und dem im Kanal (16) befindlichen nicht linearen Optischen Polymer eine dielektrische Zwischenschicht vorgesehen ist.

5. Verfahren zum Herstellen eines optischen Wellenleiterbauelements nach Patentanspruch 1, 2 oder 3 wobei das Substrat (11) mit einer ätzmittelbeständigen Schutzschicht (13) überzogen wird, diese Schutzschicht zur Bildung eines linienförmigen Spaltes an einer Stelle, an der ein optischer Wellenleiter entstehen soll, einem photolithographischen Prozeß unterworfen wird, und im Bereich eines in der Schutzschicht gebildeten linienförmigen Spaltes (14) zum Ausätzen eines Kanales (16) Ätzmittel auf das Substrat gebracht wird, dadurch gekennzeichnet, nach Ausätzen des Kanales die Substratoberfläche im Bereich des Kanales derart mit Metall bedampft oder besprüht wird, daß sich sowohl auf der Schutzschicht als auch am Grund des Kanales eine Metallschicht (22, 23) ausbildet, und daß nach Einbringen von nicht linearen Optischen Polymer in den Kanal das nicht linearen Optischen Polymer mit einer leitfähigen Schicht (33) abgedeckt und durch Anlegen einer Spannung zwischen dieser leitfähigen Schicht und der am Grund des Kanales befindlichen Metallschicht (23) polarisiert wird.

6. Verfahren nach Anspruch 5, dadurch gekennzeichnet, daß das Substrat ein Glassubstrat und das Ätzmittel Flußsäure ist und daß das Glassubstrat der Flußsäure solange ausgesetzt wird, bis die Tiefe des Kanales etwa der Breite des linienförmigen Spaltes entspricht.

7. Verfahren nach Anspruch 5 oder 6, dadurch gekennzeichnet, daß das nicht linearen Optischen Polymer durch ein Monomer gebildet wird, das nach Einbringen in den Kanal thermisch, durch UV-Strahlung oder auf eine andere Weise polymerisiert wird.

8. Verfahren nach Anspruch 5 oder 6, dadurch gekennzeichnet, daß das nicht linearen Optischen Polymer ein gelöstes Polymer ist und nach Einbringen in den Kanal getrocknet wird.

9. Verfahren nach mindestens einem der Ansprüche 5, 6 oder 7, dadurch gekennzeichnet, daß der leere Kanal von einer Glasplatte abgedeckt und das Monomer oder Polymer in flüssiger Form in den geschlossenen Kanal eingespritzt wird.

10. Verfahren nach einem der Ansprüche 5 bis 9, dadurch gekennzeichnet, daß zur Herstellung der Schutzschicht (13) auf das Glassubstrat Tantal aufgebracht wird und die Tantalschicht nach dem photolithographischen Prozeß einem thermischen Oxidationsprozeß unterworfen wird.

## Claims

1. Optical waveguide component with a substrate, preferably a glass substrate (11), which contains at least one optical waveguide consisting of optical polymer (29) which is located in a channel (16) etched into the surface of the substrate, said channel possessing at its bottom a width roughly corresponding to its depth, characterised in that the optical polymer (29) is a polymer with non-linear optical characteristics and in that the channel (16) is provided with an electrode (23) on its bottom (21).

2. Optical waveguide component according to Claim 1, characterised in that the channel (16) is partially covered above its two longitudinal sides (19, 20) by a protective layer (13), subject to a central longitudinal gap (14) being left free, and in that the width of the longitudinal gap roughly corresponds to the depth of the channel (16).

3. Optical waveguide component according to Claim 2, characterised in that the protective layer (13) consists of tantalum oxide Ta₂O₅, gold or polyimide.

4. Optical waveguide component according to Claim 2, characterised in that a dielectric intermediate layer (31) is provided between the electrode (23) and the non-linear optical polymer located in the channel (16).

5. Process for manufacturing an optical waveguide component according to Claim 1, 2 or 3, whereby the substrate (11) is coated with a protective layer (13) that is resistant to etching agent, this protective layer is subjected to a photolithographic process with a view to forming a linear gap at a point where an optical waveguide is to be formed, and in the region of a linear gap (14) formed in the protective layer etching agent is introduced onto the substrate with a view to etching out a channel (16), characterised in that after the channel has been etched out the substrate surface in the region of the channel is metallised by vapour deposition or by spraying in such a manner that both on the protective layer and on the bottom of the channel a metal layer (22, 23) is formed, and in that after non-linear optical polymer has been introduced into the channel the non-linear optical polymer is covered with a conductive layer (33) and polarisation is effected by application of a voltage between this conductive layer and the metal layer (23) located at the bottom of the channel.

6. Process according to Claim 5, characterised in that the substrate is a glass substrate and the etching agent is hydrofluoric acid and in that the glass substrate is exposed to the hydrofluoric acid until such time as the depth of the channel roughly corresponds to the width of the linear gap.

7. Process according to Claim 5 or 6, characterised in that the non-linear optical polymer is constituted by a monomer which after being introduced into the channel is polymerised thermally, by UV radiation or in some other manner.

8. Process according to Claim 5 or 6, characterised in that the non-linear optical polymer is a dissolved polymer and is dried after being introduced into the channel.

9. Process according to at least one of Claims 5, 6 or 7, characterised in that the empty channel is covered by a glass plate and the monomer or polymer is injected into the closed channel in liquid form.

10. Process according to one of Claims 5 to 9, characterised in that with a view to producing the protective layer (13) tantalum is applied to the glass substrate and subsequent to the photolithographic process the tantalum layer is subjected to a thermal oxidation process.

## Revendications

1. Composant optique de guide d'onde comportant un substrat, de préférence un substrat de verre (11), qui contient au moins un guide d'ondes lumineuses en polymère optique (29) qui se trouve dans un canal (16) qui a été réalisé par attaque chimique de la surface du substrat et possède, en son fond, une largeur qui correspond à peu près à sa profondeur, caractérisé par le fait que le polymère optique (29) est un polymère à caractéristiques optiques non linéaires et que le canal (16) comporte, en son fond (21), une électrode (23).

2. Composant optique de guide d'onde selon la revendication 1, caractérisé par le fait qu'au-dessus de ses deux bords longitudinaux (19, 20), le canal (16) est partiellement recouvert d'une couche de protection (13), en laissant libre une fente longitudinale médiane (14), et que la largeur de la fente longitudinale correspond à peu près à la profondeur du canal (16).

3. Composant optique de guide d'onde selon la revendication 2, caractérisé par le fait que la couche de protection (13) est constituée d'oxyde de tantale Ta₂O₅, d'or ou de polyimide.

4. Composant optique de guide d'onde selon la revendication 2, caractérisé par le fait qu'entre l'électrode (23) et le polymère à caractéristiques optiques non linéaires qui se trouve dans le canal (16) est prévue une couche intermédiaire diélectrique (31).

5. Procédé de fabrication d'un composant optique de guide d'onde selon la revendication 1, 2, ou 3, dans laquelle on revêt le substrat (11) d'une couche intermédiaire (13) résistant à un agent d'attaque chimique, que l'on soumet à un processus photolithographique, cette couche de protection pour former une fente de forme linéaire à un endroit où doit apparaître un guide optique d'onde, et que, dans la zone d'une fente de forme linéaire (14), formée dans la couche de protection, on rapporte sur le substrat un agent d'attaque chimique pour réaliser par attaque chimique un canal (16), caractérisé par le fait qu'après réalisation du canal par attaque chimique, on dépose, sur la surface du substrat, dans la zone du canal, un métal par vaporisation sous vide ou par pulvérisation, de façon telle qu'il se forme une couche métallique (22, 23) aussi bien sur la couche de protection qu'au fond du canal et qu'après apport dans le canal d'un polymère à caractéristiques optiques non linéaires, on recouvre d'une couche conductrice (33) ce polymère à caractéristiques optiques non linéaires et qu'on le polarise en appliquant une tension entre cette couche conductrice et la couche métallique (23) qui se trouve au fond du canal.

6. Procédé selon la revendication 5, caractérisé par le fait que le substrat est un substrat de verre et que l'agent d'attaque chimique est l'acide fluorhydrique et que l'on expose le substrat de verre à l'acide fluorhydrique jusqu'à ce que la profondeur du canal corresponde à peu près à la largeur de la fente linéaire.

7. Procédé selon la revendication 5 ou 6, caractérisé par le fait que le polymère à caractéristiques optiques non linéaires est formé par un monomère que l'on fait polymériser, après introduction dans le canal, par voie thermique, par rayonnement UV, ou d'une autre façon.

8. Procédé selon la revendication 5 ou 6, caractérisé par le fait que le polymère à caractéristiques optiques non linéaires est un polymère dissous et qu'on le fait sécher après introduction dans le canal.

9. Procédé selon au moins d'une des revendications 5, 6 ou 7, caractérisé par le fait que l'on recouvre d'une plaque de verre le canal vide et que l'on injecte le monomère ou le polymère sous forme liquide dans le canal ainsi obturé.

10. Procédé selon l'une des revendications 5 à 9, caractérisé par le fait que pour réaliser la couche de protection (13), on rapporte sur le substrat de verre du tantale et qu'après le processus photolithographique, on soumet la couche de tantale à un processus d'oxydation thermique.
